(19) **Europäisches Patentamt / European Patent Office / Office européen des brevets**

(11) **EP 4 553 114 A1**

(12) **EUROPEAN PATENT APPLICATION**
published in accordance with Art. 153(4) EPC

(43) Date of publication:
**14.05.2025 Bulletin 2025/20**

(21) Application number: **23835375.9**

(22) Date of filing: **27.06.2023**

(51) International Patent Classification (IPC):
**C08L 53/00** (2006.01)     **C08K 3/013** (2018.01)
**C08L 23/06** (2006.01)     **C08L 23/08** (2025.01)

(52) Cooperative Patent Classification (CPC):
**C08K 3/013; C08L 23/06; C08L 23/08; C08L 53/00**

(86) International application number:
**PCT/JP2023/023764**

(87) International publication number:
**WO 2024/009842 (11.01.2024 Gazette 2024/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.07.2022 JP 2022108990**

(71) Applicant: **Prime Polymer Co., Ltd.**
**Tokyo 104-0028 (JP)**

(72) Inventors:
• **KATO, Takashi**
  **Ichihara-shi, Chiba 299-0108 (JP)**
• **FUKUSHIMA, Hiroyuki**
  **Sodegaura-shi, Chiba 299-0265 (JP)**
• **ITAKURA, Keita**
  **Sodegaura-shi, Chiba 299-0265 (JP)**
• **FURUTA, Takanori**
  **Takaishi-shi, Osaka 592-8501 (JP)**
• **AMANO, Taiga**
  **Takaishi-shi, Osaka 592-8501 (JP)**

(74) Representative: **J A Kemp LLP**
**80 Turnmill Street**
**London EC1M 5QU (GB)**

(54) **RESIN COMPOSITION AND MOLDED BODY THEREOF**

(57)     An object of the present invention is to provide a resin composition having excellent hardness and spiral flow characteristics in a well-balanced manner and a molded article that is formed of the resin composition.

A resin composition of the present invention contains 50 to 94 parts by mass of a crystalline propylene/ethylene block copolymer (A) satisfying specific requirements, 1 to 25 parts by mass of an ethylene-based polymer (B) having a density of 915 to 980 kg/m$^3$ and a melt flow rate (190°C, 2.16 load) of 0.1 to 30 g/10 min and 5 to 25 parts by mass of the inorganic filler (C) (here, the total of the crystalline propylene/ethylene block copolymer (A), the ethylene-based polymer (B) and the inorganic filler (C) is set to 100 parts by mass).

EP 4 553 114 A1

**Description**

Technical Field

The present invention relates to a resin composition containing a propylene/ethylene block copolymer, and a molded article formed of the resin composition.

Background Art

Polypropylene-based resin compositions are in wide use in a variety of applications such as automotive interior and exterior parts and electrical part chassis since polypropylene-based resin compositions are easy to mold, and molded articles to be obtained are excellent in terms of, for example, stiffness and impact resistance.

For example, Patent Literature 1 describes a polypropylene-based resin composition containing a specific propylene/ethylene block copolymer, an ethylene/butene-1 copolymer elastomer and an inorganic filler as a resin composition enabling the production of a molded article having a low gloss and excellent stiffness.

In addition, Patent Literature 2 describes a polypropylene-based resin composition containing a specific polypropylene resin, an ethylene/$\alpha$-olefin copolymer rubber having specific density and MFR and an inorganic filler as a resin composition enabling the production of molded article having an improved flow mark appearance, excellent toughness and a favorable balance between stiffness and surface hardness.

Citation List

Patent Literature

    Patent Literature 1: JP2007-92049A
    Patent Literature 2: JP2008-239971A

Summary of Invention

Technical Problem

However, there is a demand for the emergence of a resin composition having a superior balance between hardness and spiral flow as a material for automotive parts such as bumpers, instrument panels (dashboards), door trims and pillars.

An object of the present invention is to provide a resin composition having excellent hardness and spiral flow characteristics in a well-balanced manner and a molded article that is formed of the resin composition.

Solution to Problem

As a result of intensive studies for achieving the object, the present inventors found that the object can be achieved by the following specific resin composition and completed the present invention.

The present invention relates to, for example, the following [1] to [9].

    [1] A resin composition comprising:

        50 to 94 parts by mass of a crystalline propylene/ethylene block copolymer (A) satisfying the following requirements (1) to (3);
        1 to 25 parts by mass of an ethylene-based polymer (B) that is an ethylene homopolymer or copolymer of ethylene and an $\alpha$-olefin having 4 to 12 carbon atoms having a density of 915 to 980 kg/m$^3$ and a melt flow rate (MFR) measured at a temperature of 190°C and a load of 2.16 kg of 0.1 to 30 g/10 min; and
        5 to 25 parts by mass of an inorganic filler (C) (here, a total of the crystalline propylene/ethylene block copolymer (A), the ethylene-based polymer (B) and the inorganic filler (C) is set to 100 parts by mass),
        requirement (1): the crystalline propylene/ethylene block copolymer (A) is a block copolymer composed of a crystalline propylene polymer component and a propylene-based copolymer component, in which an amount of the propylene-based copolymer component is 10 to 50 mass%, an intrinsic viscosity [$\eta$] of the propylene-based copolymer component that is measured in tetralin at 135°C is 2.0 to 6.0 dl/g, and a proportion of a structural unit derived from ethylene in the propylene-based copolymer component is 30 to 80 mol%, requirement (2): the propylene-based copolymer component contains a copolymer component (EP-1) and a copolymer component (EP-2),

the copolymer component (EP-1) is a component containing 40 to 80 mol% of a structural unit derived from ethylene and having an intrinsic viscosity [η] that is measured in tetralin at 135°C of 1.5 to 4.0 dl/g, and
the copolymer component (EP-2) is a component containing 30 to 50 mol% of a structural unit derived from ethylene and having an intrinsic viscosity [η] that is measured in tetralin at 135°C of 5.0 to 10 dl/g, and
requirement (3): a mass ratio (EP-1/EP-2) of the copolymer component (EP-1) to the copolymer component (EP-2) is 10/1 to 1/1.

[2] The resin composition according to [1], wherein the copolymer component (EP-1) contains 51 to 58 mol% of the structural unit derived from ethylene, and
the copolymer component (EP-2) contains 38 to 48 mol% of the structural unit derived from ethylene.

[3] The resin composition according to [1] or [2], wherein the crystalline propylene/ethylene block copolymer (A) further satisfies the following requirements (4) to (6), requirement (4): a melt flow rate (MFR) measured at a temperature of 230°C and a load of 2.16 kg is 1 to 500 g/10 min,

requirement (5): a melting point measured with a differential scanning calorimeter (DSC) is 155°C to 170°C, and
requirement (6): a mesopentad fraction (mmmm fraction) of the crystalline propylene polymer component that is measured by $^{13}$C-NMR is 96.0% to 99.9%.

[4] The resin composition according to any one of [1] to [3], wherein the crystalline propylene/ethylene block copolymer

(A) further satisfies at least one of the following requirements (7) and (8),

requirement (7): ΔC2 that is a difference between a content of the structural unit derived from ethylene of the copolymer component (EP-1) and a content of the structural unit derived from ethylene of the copolymer component (EP-2) is 1.0 to 13 mol%, and
requirement (8): Δη that is a difference between the intrinsic viscosity [η] of the copolymer component (EP-1) that is measured in tetralin at 135°C and the intrinsic viscosity [η] of the copolymer component (EP-2) that is measured in tetralin at 135°C is 5.8 to 8.5 dl/g.

[5] The resin composition according to any one of [1] to [4], further comprising:

25 parts by mass or less of a copolymer rubber (D) relative to a total of 100 parts by mass of the crystalline propylene/ethylene block copolymer (A), the ethylene-based polymer (B) and the inorganic filler (C),
wherein the copolymer rubber (D) is a copolymer of ethylene and an α-olefin having 4 to 12 carbon atoms having a density of 850 to 910 kg/m$^3$ and a melt flow rate (MFR) measured at a temperature of 190°C and a load of 2.16 kg of 0.2 g/10 min or more and less than 40 g/10 min.

[6] A molded article formed of the resin composition according to any one of [1] to [5].
[7] The molded article according to [6] that is an injection molded article.
[8] The molded article according to [6] that is an automotive part.
[9] The molded article according to [8], wherein the automotive part is a bumper.

Advantageous Effects of Invention

According to the present invention, it is possible to provide a resin composition having excellent hardness and spiral flow characteristics in a well-balanced manner and a molded article that is formed of the resin composition.

Description of Embodiments

Hereafter, the present invention will be described in more detail.

[Resin composition]

A resin composition of the present invention is a resin composition containing a crystalline propylene/ethylene block copolymer (A), an ethylene-based polymer (B) and an inorganic filler (C) and is the resin composition further comprising a copolymer rubber (D) in one aspect.

<Crystalline propylene/ethylene block copolymer (A)>

The crystalline propylene/ethylene block copolymer (A) according to the present invention satisfies all of the following requirements (1) to (3), preferably further satisfies one or more of the following requirements (4) to (6) and more preferably further satisfies all of the following requirements (4) to (6).

Requirement (1): The crystalline propylene/ethylene block copolymer (A) is a block copolymer composed of a crystalline propylene polymer component and a propylene-based copolymer component, in which an amount of the propylene-based copolymer component is 10 to 50 mass%, an intrinsic viscosity $[\eta]$ of the propylene-based copolymer component that is measured in tetralin at 135°C is 2.0 to 6.0 dl/g, and a proportion of a structural unit derived from ethylene in the propylene-based copolymer component is 30 to 80 mol%.

In the crystalline propylene/ethylene block copolymer (A) according to the present invention, a crystalline propylene polymer component is a component composed of a structural unit derived from propylene alone or a component composed of a structural unit derived from propylene and a small amount of a structural unit derived from ethylene and is considered to be crystalline and exhibit high stiffness. In the crystalline propylene/ethylene block copolymer (A), the crystalline propylene polymer component can be extracted as a 23°C n-decane insoluble portion ($D_{insol}$).

The amount of the crystalline propylene polymer component in the crystalline propylene/ethylene block copolymer (A) is 50 to 90 mass%, preferably 60 to 90 mass%, more preferably 65 to 85 mass% and particularly preferably 75 to 83 mass%. The total of the amount of the crystalline propylene polymer component and the amount of the propylene-based copolymer component is 100 mass%. In the present invention, the amounts of the crystalline propylene polymer component and the propylene-based copolymer component are amounts measured by a method employed in Examples to be described below.

In the crystalline propylene/ethylene block copolymer (A) according to the present invention, the propylene-based copolymer component is a component composed of a structural unit derived from propylene and a structural unit derived from ethylene, is a component that is not crystalline or poorly crystalline, has a low glass transition temperature, develops impact resistance and is considered to develop compatibility with a different polymer when being mixed with the different polymer. This is also referred to as a rubber component in some cases. In the crystalline propylene/ethylene block copolymer (A), the propylene-based copolymer component can be extracted as a 23°C n-decane soluble portion ($D_{sol}$).

The amount of the propylene-based copolymer component in the crystalline propylene/ethylene block copolymer (A) is 10 to 50 mass%, preferably 10 to 40 mass% and more preferably 15 to 35 mass%. When the amount of the propylene-based copolymer component in the crystalline propylene/ethylene block copolymer (A) is below the lower limit value of the above-described range, there is a tendency that the impact resistance of a molded article that is obtained from the resin composition containing this deteriorates. This is considered to be because a decrease in the proportion of the propylene-based copolymer component decreases the absorption energy of the crystalline propylene/ethylene block copolymer (A) against impact.

On the other hand, when the amount of the propylene-based copolymer component in the crystalline propylene/ethylene block copolymer (A) is above the upper limit value of the above-described range, there is a case where the moldability of the resin composition containing this at a high speed is poor, and there is a case where the stiffness (buckling strength) of a molded article that is obtained from the resin composition is poor.

The intrinsic viscosity $[\eta]$ of the propylene-based copolymer component that is measured in tetralin of 135°C is 2.0 to 6.0 dl/g, preferably 2.5 to 6.0 dl/g, more preferably 3.0 to 5.0 dl/g, still more preferably 3.1 to 4.5 dl/g, and particularly preferably 3.2 to 4.0 dl/g.

When the intrinsic viscosity is above the upper limit value or below the lower limit value of the above-described range, there is a case where the impact resistance of a molded article that is obtained from the resin composition deteriorates.

The value of the intrinsic viscosity is a value measured by a method employed in Examples to be described below.

The proportion of the structural unit derived from ethylene in the propylene-based copolymer component is 30 to 80 mol%, preferably 35 to 60 mol%, more preferably 40 to 55 mol% and particularly preferably 45 to 54 mol%. The total of the structural unit derived from propylene and the structural unit derived from ethylene in the propylene-based copolymer component is 100 mol%.

When the proportion of the structural unit derived from ethylene is below the lower limit value of the above-described range, there is a tendency that the impact resistance of a molded article that is obtained from the resin composition is poor. This is considered to be because a decrease in the content of ethylene in the propylene-based copolymer component decreases the glass transition temperature, increases the degree of crystallization and decreases the absorption energy against impact. In addition, when the proportion of the structural unit derived from ethylene is above the upper limit value of the above-described range, there is a case where the moldability of the resin composition at a high speed is poor.

The proportion of the structural unit derived from ethylene in the propylene-based copolymer component is a proportion measured by a method employed in Examples to be described below.

Requirement (2): The propylene-based copolymer component contains a copolymer component (EP-1) and a copolymer component (EP-2),

the copolymer component (EP-1) is a component containing 40 to 80 mol% of a structural unit derived from ethylene and having an intrinsic viscosity [η] that is measured in tetralin at 135°C of 1.5 to 4.0 dl/g, and

the copolymer component (EP-2) is a component containing 30 to 50 mol% of a structural unit derived from ethylene and having an intrinsic viscosity [η] that is measured in tetralin at 135°C of 5.0 to 10 dl/g.

That is, the propylene-based copolymer component in the crystalline propylene/ethylene block copolymer (A) according to the present invention contains the copolymer component (EP-1) containing 40 to 80 mol% of a structural unit derived from ethylene and having an intrinsic viscosity [η] that is measured in tetralin at 135°C of 1.5 to 4.0 dl/g and the copolymer component (EP-2) containing 30 to 50 mol% of a structural unit derived from ethylene and having an intrinsic viscosity [η] that is measured in tetralin at 135°C of 5.0 to 10 dl/g.

The content of the structural unit derived from ethylene in the copolymer component (EP-1) is 40 to 80 mol%, preferably 45 to 70 mol%, more preferably 50 to 60 mol% and particularly preferably 51 to 58 mol%. The content of the structural unit derived from propylene and the content of the structural unit derived from ethylene in the copolymer component (EP-1) is set to 100 mol%. When the content of the structural unit derived from ethylene in the copolymer component (EP-1) is above the upper limit value of the above-described range, there is a case where the stiffness or the hardness becomes insufficient. In addition, when the content of the structural unit derived from ethylene in the copolymer component (EP-1) is below the lower limit value of the above-described range, there is a case where the impact resistance becomes insufficient.

The intrinsic viscosity [η] of the copolymer component (EP-1) that is measured in tetralin at 135°C is 1.5 to 4.0 dl/g, preferably 1.8 to 3.5 dl/g and more preferably 2.0 to 3.0 dl/g. When the intrinsic viscosity [η] of the copolymer component (EP-1) is above the upper limit value of the above-described range, there is a case where the melt fluidity of the resin composition deteriorates and the moldability deteriorates. When the intrinsic viscosity [η] of the copolymer component (EP-1) is below the lower limit value of the above-described range, there is a case where the stiffness or hardness of a molded article of the resin composition becomes insufficient or a case where the toughness or the impact resistance becomes insufficient.

The content of the structural unit derived from ethylene in the copolymer component (EP-2) is 30 to 50 mol%, preferably 35 to 50 mol%, more preferably 38 to 48 mol% and particularly preferably 40 to 47 mol%. The content of the structural unit derived from propylene and the content of the structural unit derived from ethylene in the copolymer component (EP-2) is set to 100 mol%. When the content of the structural unit derived from ethylene in the copolymer component (EP-2) is above the upper limit value or below the lower limit value of the above-described range, there is a case where the stiffness or the impact resistance becomes insufficient.

The intrinsic viscosity [η] of the copolymer component (EP-2) that is measured in tetralin of 135°C is 5.0 to 10 dl/g, preferably 6.0 to 10 dl/g, more preferably 7.0 to 10 dl/g, still more preferably 8.0 to 9.9 dl/g, and particularly preferably 8.5 to 9.8 dl/g. When the intrinsic viscosity [η] of the copolymer component (EP-2) is above the upper limit value of the above-described range, there is a case where the resin composition becomes poor in homogeneity and there is a case where a molded article that is formed of the resin composition causes unevenness on the surface or has poor mechanical characteristics such as stiffness.

Requirement (3): The mass ratio (EP-1/EP-2) of the copolymer component (EP-1) to the copolymer component (EP-2) is 10/1 to 1/1.

The mass ratio (EP-1/EP-2) of the copolymer component (EP-1) to the copolymer component (EP-2) is preferably 8/1 to 2/1 and more preferably 6/1 to 3/1.

When the mass ratio (EP-1/EP-2) is above the upper limit value of the above-described range, there is a concern that a molded article that is formed of the resin composition may be poor in the balance between stiffness and impact resistance. In addition, when the mass ratio (EP-1/EP-2) is below the lower limit value of the above-described range, there is a concern that the fluidity of the resin composition may deteriorate and may cause poor molding.

Requirement (4): The melt flow rate (MFR) measured at a temperature of 230°C and a load of 2.16 kg is 1 to 500 g/10 min.

The melt flow rate (MFR; 230°C, 2.16 kg load) of the crystalline propylene/ethylene block copolymer (A) is preferably 10 to 300 g/10 min, more preferably 20 to 150 g/10 min, still more preferably 30 to 120 g/10 min and particularly preferably 40 to 70 g/10 min.

When this MFR is above the upper limit value of the above-described range, there is a case where a burr is generated when a resin composition has been injection-molded. In addition, when this MFR is below the lower limit value of the above-described range, there is a case where the fluidity of the resin composition deteriorates and the moldability is poor.

<u>Requirement (5)</u>: The melting point measured with a differential scanning calorimeter (DSC) is 155°C to 170°C.

The melting point (Tm) of the crystalline propylene/ethylene block copolymer (A) is preferably 158°C to 168°C and more preferably 160°C to 165°C.

This melting point (Tm) can be obtained by performing measurement under the following conditions using a differential scanning calorimeter (DSC) according to JIS K 7121 and defining the temperature for the apex of an endothermic peak in the third step as the melting point. In a case where there are a plurality of endothermic peaks, the temperature for the apex of the highest endothermic peak is defined as the melting point.

(Measurement conditions)

Atmosphere: Nitrogen gas atmosphere
Sample amount: 5 mg
Sample shape: Press film (molded at 230°C, thickness: 200 to 400 $\mu$m)
First step: The sample is heated from 30°C up to 240°C at a rate of 10°C/min and held for 10 minutes.
Second step: The sample is cooled to 60°C at 10°C/min.
Third step: The sample is heated up to 240°C at a rate of 10°C/min.

<u>Requirement (6)</u>: The mesopentad fraction (mmmm fraction) of the crystalline propylene polymer component that is measured by $^{13}$C-NMR is 96.0% to 99.9%.

Details such as the measurement conditions are as described in the section of Examples described below. This mesopentad fraction (mmmm fraction) is preferably 97.0% to 99.9% and more preferably 97.6% to 99.9%.

In a case where the crystalline propylene/ethylene block copolymer (A) according to the present invention satisfies the requirement (6), since the stereoregularity of the crystalline propylene polymer component is high, the degree of crystallization during crystallization becomes high. Therefore, there is a tendency that a molded article that is formed of the resin composition have high stiffness, which is preferable.

The crystalline propylene/ethylene block copolymer (A) according to the present invention preferably further satisfies at least one of the following requirements (7) and (8) and more preferably satisfies both of the requirements (7) and (8).

Requirement (7): $\Delta$C2 that is a difference between a content of the structural unit derived from ethylene of the copolymer component (EP-1) and a content of the structural unit derived from ethylene of the copolymer component (EP-2) is preferably 1.0 to 13 mol% and more preferably 3.5 to 11 mol%.

In a case where the crystalline propylene/ethylene block copolymer (A) according to the present invention satisfies the requirement (7), the balance between normal temperature impact property and low temperature impact property is excellent, which is preferable.

Requirement (8): $\Delta\eta$ that is a difference between the intrinsic viscosity [$\eta$] of the copolymer component (EP-1) that is measured in tetralin at 135°C and the intrinsic viscosity [$\eta$] of the copolymer component (EP-2) that is measured in tetralin at 135°C is preferably 5.0 to 8.5 dl/g, more preferably 5.8 to 8.5 dl/g and still more preferably 6.3 to 8.0 dl/g.

In a case where the crystalline propylene/ethylene block copolymer (A) according to the present invention satisfies the requirement (8), it is possible to satisfy both appearance improvement and surface impact improvement, which is preferable.

<Method for producing crystalline propylene/ethylene block copolymer (A)>

The crystalline propylene/ethylene block copolymer (A) that is used in the present invention described above can be suitably produced by, for example, a method including a step (1) of performing the polymerization of propylene to produce the crystalline propylene polymer component (1), step (2) of performing the copolymerization of propylene and ethylene in the presence of the crystalline propylene polymer component (1) to produce the copolymer component (EP-1) and a step (3) of performing the copolymerization of propylene and ethylene in the presence of the crystalline propylene polymer component (1) and the copolymer component (EP-1) to produce the copolymer component (EP-2) in this order.

In these step (1), step (2) and step (3), it is normal to perform the homopolymerization of propylene or the copolymerization of propylene and ethylene in the presence of a metallocene compound-containing catalyst or in the presence of a Ziegler-Natta catalyst, preferably, in the presence of a Ziegler-Natta catalyst.

Polymerization in the presence of a Ziegler-Natta catalyst makes it easy to obtain a crystalline propylene/ethylene block copolymer (A) having a wide molecular weight distribution and favorable moldability.

(Metallocene compound-containing catalyst)

Examples of the metallocene compound-containing catalyst include metallocene catalysts composed of a metallocene compound, at least one compound selected from an organometallic compound, an organoaluminum oxy compound and a compound capable of reacting with a metallocene compound to form an ion pair, and furthermore, a particulate carrier as necessary, and preferable examples thereof include metallocene catalysts capable of isotactic or other stereoregular polymerization. Among the metallocene compounds, for example, cross-linkable metallocene compounds that are exemplified in WO01/27124 and metallocene compounds described in Paragraphs [0068] to [0076] of WO2010/74001 are preferable. In addition, as the organometallic compound, as the organoaluminum oxy compound, as the compound that reacts with a transition metal compound to form an ion pair and, furthermore, as the particulate carrier that is used as necessary, for example, compounds disclosed in WO01/27124 and JPH11(1999)-315109A can be used with no limitations.

(Ziegler-Natta catalyst)

The propylene-based block copolymer can be produced using a highly stereoregular Ziegler-Natta catalyst. As the highly stereoregular Ziegler-Natta catalyst, a variety of well-known catalysts can be used. For example, catalysts composed of a solid titanium catalyst component containing magnesium, titanium, a halogen and an electron donor (a), an organometallic compound catalyst component (b) and an organosilicon compound catalyst component having at least one group selected from the group consisting of a cyclopentyl group, a cyclopentenyl group, a cyclopentadienyl group and derivatives thereof (c) can be used, and these catalyst components can be produced by well-known methods, for example, the method described in [0078] to [0094] of WO2010/74001.

At the time of performing the polymerization of propylene using the catalyst composed of the solid titanium catalyst component (a), the organometallic compound catalyst component (b) and the organosilicon compound catalyst component (c) described above, it is also possible to perform preliminary polymerization in advance. In the preliminary polymerization, an olefin is polymerized in the presence of the solid titanium catalyst component (a), the organometallic compound catalyst component (b) and, if necessary, the organosilicon compound catalyst component (c).

As the olefin that is preliminarily polymerized, $\alpha$-olefins having 2 to 8 carbon atoms can be used. Specifically, for example, linear olefins such as ethylene, propylene, 1-butene and 1-octene; and olefins having a branched structure such as 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene and 3-ethyl-1-hexene can be used. These may be copolymerized.

The preliminary polymerization is desirably performed so that about 0.1 to 1000 g, preferably about 0.3 to 500 g, of a polymer is generated per gram of the solid titanium catalyst component (a). When the preliminary polymerization amount is too large, there is a case where the (co)polymer generation efficiency in the polymerization decreases. In the prepolymerization, the catalyst can be used in a concentration much higher than the catalyst concentration in the system of the polymerization.

At the time of the polymerization, the solid titanium catalyst component (a) (or a preliminary polymerization catalyst) is desirably used in an amount of about 0.0001 to 50 millimoles, preferably about 0.001 to 10 millimoles, in terms of titanium atoms per liter of the polymerization volume. The organometallic compound catalyst component (b) is desirably used in an amount of about 1 to 2000 moles, preferably about 2 to 500 moles, relative to 1 mole of titanium atoms in the polymerization system. The organosilicon compound catalyst component (c) is desirably used in an amount of about 0.001 to 50 moles, preferably about 0.01 to 20 moles, per 1 mole of metal atoms in the organometallic compound catalyst component (b).

The polymerization may be performed by any of a gas-phase polymerization method, a liquid-phase polymerization method such as a solution polymerization method or a suspension polymerization method, and the step (1), the step (2) and the step (3) may be performed by separate methods. In addition, the polymerization may be performed by any method of a continuous method and a semi-continuous method, and each of the above-described steps may be performed separately in a plurality of polymerization vessels, for example, 2 to 10 polymerization vessels. Industrially, the polymerization by a continuous method is most preferable.

As a polymerization media, inert hydrocarbons may be used and liquid propylene may also be used as the polymerization medium. In addition, as the polymerization conditions in each stage, the polymerization temperature is appropriately selected from a range of about -50°C to +200°C and preferably about 20°C to 100°C, and the polymerization pressure is appropriately selected from a range of normal pressure to 10 MPa (gauge pressure) and preferably about 0.2 to 5 MPa (gauge pressure).

In the production method of the present invention, for example, in reaction device in which three or more polymerization vessels are connected together in series, the step (1), the step (2) and the step (3) are continuously performed. The step (1) may be performed using each of polymerization devices in which two or more reactors are coupled together in series, the step (2) may be performed using each of polymerization devices in which two or more reactors are coupled together in series or the step (3) may be performed using each of polymerization devices in which two or more reactors are coupled together in series.

The step (1) is a step of polymerizing propylene and arbitrarily ethylene at a polymerization temperature of 0°C to 100°C at a polymerization pressure of normal pressure to 5 MPa in terms of gauge pressure and is a step of producing the crystalline propylene polymer component (1) by supplying no ethylene or supplying a small amount of ethylene compared with the feed amount of propylene. The crystalline propylene polymer component (1) is a crystalline portion in the crystalline propylene/ethylene block copolymer (A), can be extracted from crystalline propylene/ethylene block copolymer (A) as a portion insoluble in n-decane at 23°C ($D_{insol}$), is a portion, normally, mainly composed of a structural unit derived from propylene and is considered to be crystalline and exhibit high stiffness.

In addition, the intrinsic viscosity [$\eta$] of the crystalline propylene polymer component (1) that is generated in the step (1) may be also adjusted by introducing a chain transfer agent represented by hydrogen gas as necessary.

The step (2) and the step (3) are steps of producing the propylene-based copolymer component, between these, the step (2) is a step of producing the copolymer component (EP-1) and the step (3) is a step of producing the copolymer component (EP-2). In the present invention, the propylene-based copolymer component is composed of the copolymer component (EP-1) and the copolymer component (EP-2). The propylene-based copolymer component is a portion that is not crystalline or poorly crystalline in the crystalline propylene/ethylene block copolymer (A), can be extracted from crystalline propylene/ethylene block copolymer (A) as a portion soluble in n-decane at 23°C ($D_{sol}$) and is a portion, normally, mainly composed of structural units derived from propylene and ethylene. The propylene-based copolymer component has a low glass transition temperature, develops impact resistance and is considered to develop compatibility with a different polymer when being mixed with the different polymer. This is also referred to as a rubber component in some cases.

The step (2) is a step of copolymerizing propylene and ethylene at a polymerization temperature of 0°C to 100°C and a polymerization pressure of normal pressure to 5 MPa in terms of gauge pressure in the presence of the crystalline propylene polymer component (1) and is a step of producing the copolymer component (EP-1) in the propylene-based copolymer component, which is a non-crystalline or poorly crystalline component, by setting the proportion of the feed amount of ethylene relative to the feed amount of propylene to be larger than that in the step (1).

In addition, the intrinsic viscosity [$\eta$] of the copolymer component (EP-1) may be also adjusted by introducing a chain transfer agent represented by hydrogen gas as necessary.

The step (3) is a step of copolymerizing propylene and ethylene at a polymerization temperature of 0°C to 100°C and a polymerization pressure of normal pressure to 5 MPa in terms of gauge pressure in the presence of the crystalline propylene polymer component produced in the step (1) and the copolymer component (EP-1) produced in the step (2) and is a step of producing the copolymer component (EP-2) in the propylene-based copolymer component, which is a non-crystalline or poorly crystalline component.

The amount of the propylene-based copolymer component in the crystalline propylene/ethylene block copolymer (A) in the requirement (1) is the proportion (mass%) of the crystalline propylene polymer component (1) in the total of the crystalline propylene polymer component (1) and the propylene-based copolymer component (the total of the copolymer component (EP-1) and the copolymer component (EP-2)) and thus can be adjusted by adjusting, for example, the polymerization time in each step. That is, the amount of the propylene-based copolymer component can be increased by increasing the proportion of the polymerization times in the step (2) and the step (3) in the entire polymerization time.

The ethylene content in the requirement (1) or (2) can be adjusted by adjusting the proportion of the feed amount of ethylene relative to the feed amount of propylene at the time of performing each of the step (2) and the step (3). That is, the ethylene content can be increased by increasing the proportion of this feed amount, and the ethylene content can be decreased by decreasing the proportion of this feed amount.

The intrinsic viscosity [$\eta$] in the requirement (1) or (2) can be adjusted with the feed amount of the hydrogen gas that is used as the chain transfer agent at the time of performing each of the step (2) and the step (3). That is, the intrinsic viscosity [$\eta$] can be decreased by increasing the proportion of the feed amount of the hydrogen gas relative to the feed amount of the monomers (that is, propylene and ethylene), and the intrinsic viscosity [$\eta$] can be increased by decreasing the proportion of the feed amount of the hydrogen gas relative to the feed amount of the monomers.

The mass ratio (EP-1/EP-2) of the copolymer component (EP-1) to the copolymer component (EP-2) in the requirement (3) can be adjusted by, for example, adjusting the polymerization time in each step. That is, the mass ratio (EP-1/EP-2) can be increased by increasing the proportion of the polymerization time in the step (2) in the entire polymerization time. In addition, the mass ratio (EP-1/EP-2) can be decreased by increasing the proportion of the polymerization time in the step (3) in the entire polymerization time.

The requirements (4) and (5), that is, the MFR and melting point of the crystalline propylene/ethylene block copolymer (A) can be adjusted by adjusting the proportion of the feed amount of the hydrogen gas as the chain transfer agent relative to the feed amount of the monomers (that is, propylene in the case of the homopolymerization of propylene and propylene and ethylene in the case of the copolymerization) at the time of performing the step (1) to the step (3). That is, an increase in this proportion makes it possible to increase the MFR and decrease the melting point, and a decrease in this proportion makes it possible to decrease the MFR and increase the melting point.

The requirement (6), that is, the melting point of the crystalline propylene/ethylene block copolymer (A) and the mesopentad fraction (mmmm fraction) of the crystalline propylene polymer component can be adjusted by adjusting a catalyst or an external donor system that is used in the polymerization.

After the end of the polymerization, a well-known post treatment step such as a catalyst deactivation treatment step, a catalyst residue removal step or a drying step may be performed as necessary.

According to a production method as described above, it is possible to produce the crystalline propylene/ethylene block copolymer (A) suitable for a resin composition enabling a molded article being excellent in terms of appearance and impact resistance to be obtained. The reason therefor is not necessarily certain, but it is considered that a low-molecular-weight polymerized rubber component having a relatively large content of a structural unit derived from ethylene and excellent impact modification performance and a high-molecular-weight polymerized rubber component having an excellent appearance improvement effect well disperse in a polymerization powder stage and thereby develop such effects.

In addition, the crystalline propylene/ethylene block copolymer (A) according to the present invention may also contain a structural unit derived from biomass-derived propylene and/or a structural unit derived from biomass-derived ethylene. In addition, the crystalline propylene/ethylene block copolymer (A) may also contain a structural unit derived from chemical recycling-derived propylene and/or a structural unit derived from chemical recycling-derived ethylene. The monomers that constitute the polymer (propylene and/or ethylene) may be only biomass-derived monomers (propylene and/or ethylene), may be only chemical recycling-derived monomers (propylene and/or ethylene), may be only fossil fuel-derived monomers (propylene and/or ethylene), may contain both a biomass-derived monomer (propylene and/or ethylene) and a fossil fuel-derived monomer (propylene and/or ethylene), may contain both a biomass-derived monomer (propylene and/or ethylene) and a chemical recycling-derived monomer (propylene and/or ethylene), may contain both a biomass-derived monomer (propylene and/or ethylene) and a chemical recycling-derived monomer (propylene and/or ethylene) or may contain all of a biomass-derived monomer (propylene and/or ethylene), a chemical recycling-derived monomer (propylene and/or ethylene) and a fossil fuel-derived monomer (propylene and/or ethylene).

Biomass-derived propylene and biomass-derived ethylene are monomers composed of, as raw materials, any renewable natural raw materials derived from, for example, a plant or an animal, including fungi, yeasts, algae and bacteria, or residues thereof, contain a $^{14}C$ isotope as carbon in a proportion of about $1 \times 10^{-12}$ and have a biomass carbon concentration (pMC) measured according to ASTM D 6866 of about 100 (pMC). The biomass-derived propylene and the biomass-derived ethylene can be obtained by, for example, a conventionally known method.

The crystalline propylene/ethylene block copolymer (A) preferably contains the structural unit derived from biomass-derived propylene and/or the structural unit derived from biomass-derived ethylene from the viewpoint of environmental impact reduction. As long as the polymer production conditions such as the catalyst for polymerization and the polymerization temperature are the same, even when the raw material propylene is a propylene-based block copolymer containing biomass-derived propylene and/or biomass-derived ethylene, the molecular structure except the $^{14}C$ isotope being contained in a proportion of about $1 \times 10^{-12}$ is the same as the propylene/ethylene block copolymer composed of fossil fuel-derived propylene and fossil fuel-derived ethylene. Therefore, it is considered that the performance also does not change therefrom.

The crystalline propylene/ethylene block copolymer (A) preferably contains the chemical recycling-derived propylene and the chemical recycling-derived ethylene from the viewpoint of environmental impact reduction (mainly waste reduction). Even when the raw material propylene and/or ethylene contains the chemical recycling-derived monomer, since the chemical recycling-derived propylene and/or the chemical recycling-derived ethylene is a monomer obtained by returning a polymer such as waste plastic to a monomer unit such as ethylene by, for example, depolymerization or pyrolysis or a monomer produced using the monomer as a raw material, as long as the polymer production conditions such as the catalyst for polymerization, the polymerization process, and the polymerization temperature are the same, the molecular structure is the same as that of a crystalline propylene/ethylene block copolymer composed of a fossil fuel-derived monomer. Therefore, it is considered that the performance also does not change.

<Ethylene-based polymer (B)>

The ethylene-based polymer (B) according to the present invention is an ethylene homopolymer or copolymer of ethylene and an $\alpha$-olefin having 4 to 12 carbon atoms, the density is 915 to 980 kg/m$^3$ and the melt flow rate (MFR; 190°C, 2.16 kg load) measured at a temperature of 190°C and a load of 2.16 kg is 0.1 to 30 g/10 min.

In a case where the ethylene-based polymer (B) is a copolymer of ethylene and an $\alpha$-olefin having 4 to 12 carbon atoms, examples of the $\alpha$-olefin having 4 to 12 carbon atoms include butene-1, pentene-1, hexene-1, heptene-1, octene-1 and decene-1, and butene-1, hexene-1 and octene-1 are preferable.

In a case where the ethylene-based polymer (B) is a copolymer of ethylene and an $\alpha$-olefin having 4 to 12 carbon atoms, the content of the structural unit derived from ethylene is 51 mol% or more and less than 100 mol%.

The density of the ethylene-based polymer (B) is preferably 910 to 965 kg/m$^3$, more preferably 910 to 950 kg/m$^3$ and still more preferably 911 to 945 kg/m$^3$. The MFR (190°C, 2.16 kg load) of the ethylene-based polymer (B) is preferably 0.1 to 20 g/10 min, more preferably 0.5 to 10 g/10 min and still more preferably 1 to 9 g/10 min.

The ethylene-based polymer (B) preferably has such MFR and density from the viewpoint of the compatibility with, for example, the crystalline propylene/ethylene block copolymer (A).

The ethylene-based polymer (B) can be produced by polymerizing ethylene alone or copolymerizing ethylene and an $\alpha$-olefin having 4 to 12 carbon atoms by a conventionally well-known method or a commercially available product may also be used.

<Inorganic filler (C)>

As the inorganic filler (C) according to the present invention, well-known inorganic fillers can be used with no particular limitations, examples thereof include talc, mica, calcium carbonate, barium sulfate, glass fibers, gypsum, magnesium carbonate, magnesium oxide, titanium oxide, iron oxide, furthermore, metal powders of, for example, zinc, copper, iron and aluminum and carbon fibers, and these can be used singly or in a mixture form. Among these, for example, talc, mica, calcium carbonate and glass fibers are preferable, and talc is particularly preferable. As the average particle diameter of talc, the volume-based average particle diameter that is measured by laser diffraction is desirably within a range of 1 to 5 $\mu$m and preferably 2.5 to 4.5 $\mu$m.

The inorganic filler (C) may be used singly or two or more inorganic fillers may be used in combination.

<Copolymer rubber (D)>

The resin composition of the present invention may contain a copolymer rubber (D) as necessary in addition to each component of the crystalline propylene/ethylene block copolymer (A), the ethylene-based polymer (B) and the inorganic filler (C) described above.

The copolymer rubber (D) according to the present invention is a copolymer of ethylene and an $\alpha$-olefin having 4 to 12 carbon atoms, the density is 850 to 910 kg/m$^3$ and the melt flow rate (MFR; 190°C, 2.16 kg load) measured at a temperature of 190°C and a load of 2.16 kg is 0.2 g/10 min or more and less than 40 g/10 min.

Examples of the $\alpha$-olefin having 4 to 12 carbon atoms include butene-1, pentene-1, hexene-1, heptene-1, octene-1 and decene-1, and butene-1, hexene-1 and octene-1 are preferable. Examples of the copolymer rubber (D) include ethylene/1-butene random copolymer rubber, ethylene/1-hexene random copolymer rubber and ethylene/1-octene random copolymer rubber, and preferable examples thereof include ethylene/1-octene random copolymer rubber or ethylene/1-butene random copolymer rubber. In addition, two or more ethylene/$\alpha$-olefin random copolymer rubbers may also be jointly used.

The density of the copolymer rubber (D) is preferably 850 to 895 kg/m$^3$, more preferably 855 to 875 kg/m$^3$ and still more preferably 862 to 874 kg/m$^3$. The MFR (190°C, 2.16 kg load) of the copolymer rubber (D) is preferably 0.2 to 20 g/10 min, more preferably 0.2 to 10 g/10 min and still more preferably 1 to 9 g/10 min.

The copolymer rubber (D) preferably has such MFR and density from the viewpoint of, for example, the impact resistance of a molded article that is formed of the resin composition.

The copolymer rubber (D) can be produced by copolymerizing ethylene and an $\alpha$-olefin having 4 to 12 carbon atoms by a conventionally well-known method or a commercially available product may also be used.

<Other components (E)>

The resin composition of the present invention may further contain, in addition to the components (A) to (C) described above and the component (D) as necessary, other components (E) as necessary to an extent that the object of the present invention is not impaired.

Examples of the other components (E) include a variety of other additives such as a nucleating agent, a heat stabilizer, an antistatic agent, a weather stabilizer, a light stabilizer, an anti-aging agent, an antioxidant, a fatty acid metal salt, a softener, a dispersant, a filler, a colorant, a lubricant and a pigment. These additives may be used singly or a plurality of additive may be used in combination. In the case of combining a plurality of, for example, additives, the mixing order of the additives to be combined is arbitrary, the additives may be mixed together at the same time, and a multi-stage mixing method in which some of the components are mixed together and the other components are then mixed together may also be employed.

<Resin composition>

The resin composition of the present invention contains 50 to 94 parts by mass of the crystalline propylene/ethylene block copolymer (A), 1 to 25 parts by mass of the ethylene-based polymer (B) and 5 to 25 parts by mass of the inorganic filler (C) in a case where the total of the crystalline propylene/ethylene block copolymer (A), the ethylene-based polymer (B) and the inorganic filler (C) described above is set to 100 parts by mass. In a case where the total of the crystalline propylene/ethylene block copolymer (A), the ethylene-based polymer (B) and the inorganic filler (C) is set to 100 parts by mass, the resin composition of the present invention preferably contains 55 to 89 parts by mass of the crystalline propylene/ethylene block copolymer (A), 1 to 20 parts by mass of the ethylene-based polymer (B) and 10 to 25 parts by mass of the inorganic filler (C) and more preferably contains 60 to 84 parts by mass of the crystalline propylene/ethylene block copolymer (A), 1 to 15 parts by mass of the ethylene-based polymer (B) and 15 to 25 parts by mass of the inorganic filler (C).

In addition, the resin composition of the present invention may further contain the copolymer rubber (D) described above. The content of the copolymer rubber (D) is in a range of preferably 25 parts by mass or less, more preferably 20 parts by mass or less, still more preferably 18 parts by mass or less and particularly preferably 17 parts by mass or less with respect to a total of 100 parts by mass of the crystalline propylene/ethylene block copolymer (A), the ethylene-based polymer (B) and the inorganic filler (C). In a case where the resin composition of the present invention contains the copolymer rubber (D), the lower limit value of the content of the copolymer rubber (D) is, for example, 0.1 parts by mass, preferably 1 part by mass and more preferably 2 parts by mass with respect to a total of 100 parts by mass of the crystalline propylene/ethylene block copolymer (A), the ethylene-based polymer (B) and the inorganic filler (C). When the resin composition of the present invention contains the copolymer rubber (D) in such an amount, it is possible to improve the impact resistance of a molded article that is obtained from the resin composition.

The resin composition of the present invention may further contain the other components (E) described above to an extent that the object of the present invention is not impaired. The content of the other components (E) in the resin composition of the present invention is, for example, 10 parts by mass or less, preferably 5 parts by mass or less and more preferably 3 parts by mass or less with respect to a total of 100 parts by mass of the crystalline propylene/ethylene block copolymer (A), the ethylene-based polymer (B) and the inorganic filler (C).

The resin composition of the present invention can be produced by combining each of the above-described components in a desired combination proportion.

Specifically, the resin composition of the present invention can be obtained by mixing or melt-kneading the crystalline propylene/ethylene block copolymer (A), the ethylene-based polymer (B) and the inorganic filler (C) described above and the copolymer rubber (D) and the other components (E) as necessary at the same time or sequentially with a mixing device such as a Banbury mixer, a single screw extruder, a twin screw extruder or a high-speed twin screw extruder.

The resin composition of the present invention desirably has fluidity suitable for injection molding, which does not limit the characteristics, and the melt flow rate (MFR) measured at a temperature of 230°C and a load of 2.16 kg is preferably 10 to 50 g/10 min and more preferably 15 to 45 g/10 min. In addition, the spiral flow that is measured by a method to be specified in Examples to be described below is preferably 130 to 160 cm and more preferably 135 to 150 cm.

The resin composition of the present invention can be molded by a conventionally well-known molding method for molding resin compositions, which makes it possible to produce molded articles. The propylene-based polymer composition of the present invention is suitably used particularly for, for example, injection molding and extrusion molding.

Such a resin composition of the present invention can be suitably used in a variety of fields such as automotive interior or exterior parts, home appliance parts and food containers. Molded articles composed of the resin composition of the present invention exhibit mechanical characteristics that can be suitably used in, for example, automotive interior or exterior parts, have particularly excellent stiffness, suppress the generation of a flow mark and are also excellent in terms of appearance.

Molded article

A molded article of the present invention is a molded article formed of the above-described resin composition of the present invention. The molded article of the present invention is preferably an injection molded article, an extrusion molded article or a press molded article and more preferably an injection molded article.

The molded article of the present invention can be suitably used in a variety of applications. Particularly, the molded article is excellent in terms of mechanical characteristics such as hardness, impact resistance and stiffness, is also excellent in terms of specifying spiral flow during injection molding, is less likely to allow the generation of a flow mark and have an excellent appearance and thus can be suitably used in automotive part applications such as automotive interior parts such as an installment panel, a door trim and a pillar and automotive exterior parts such as a bumper.

As other automotive part applications, the molded article can be used in, for example, automotive exterior parts such as a side mold and an aerodynamic undercover, exterior parts such as a fender, a door panel and a step and engine peripheral parts such as an engine cover, a fan and a fan shroud.

As the food containers, the molded article can be used in, for example, food containers such as tableware, retort containers, freezer storage containers, retort pouches, microwave heat-resistant containers, frozen food containers, frozen dessert cups, cups and beverage bottles, retort containers and bottle containers.

Examples of other applications of the molded article of the present invention include chassis for home appliances, electric wire coating materials, insulators for high-voltage wires, tubes for cosmetic and perfume sprays, medical tubes, infusion tubes, pipes, wire harness, interior materials for, for example, motorcycles, railway vehicles, aircraft and ships, instrument panel skins, door trim skins, rear package trim skins, ceiling skins, rear pillar skins, seat back garnishes, console boxes, arm rests, airbag case lids, shift knobs, assist grips, side step mats, reclining covers, trunk seats, seat belt buckles, inner and outer moldings, roof moldings, belt moldings, other molding materials, automotive sealing materials such as door seals and body seals, glass run channels, mudguards, kicking plates, step mats, license plate housings, automotive hose members, air duct hoses, air duct covers, air intake pipes, air dam skirts, timing belt cover seals, bonnet cushions, door cushions, other automotive interior and exterior materials, special tires such as vibration-damping tires, static tires, car racing tires and radio-controlled tires, packing, automobile dust covers, lamp seals, automotive boot materials, rack and pinion boots, timing belts, wire harnesses, grommets, emblems, air filter packing, covering materials for, for example, furniture, footwear, clothing, bags and building materials, architectural sealing materials, waterproof sheets, building material sheets, building material gaskets, building material window films, iron core protection members, gaskets, doors, door frames, window frames, frame moldings, baseboards, opening frames, flooring materials, ceiling materials, wallpaper, health products (for example: non-slip mats/sheets and fall prevention films/mats/sheets), health equipment members, impact absorbing pads, protectors/protective equipment (for example: helmets and guards), sporting goods (for example: sports grips and protectors), sports protective gears, rackets, mouth guards, balls, golf balls, transport equipment (for example: impact absorbing grips for transport and impact absorbing sheets), vibration-damping pallets, impact-absorbing dampers, insulators, impact-absorbing materials for footwear, impact-absorbing foams, impact-absorbing films, other impact-absorbing materials, grip materials, miscellaneous goods, toys, midsoles, innersoles and outsoles of shoes, sandals, suction cups, toothbrushes, flooring materials, gymnastics mats, power tool members, agricultural machinery members, heat dissipation materials, transparent substrates, soundproofing materials, cushioning materials, electric wire cables, shape-memory materials, gaskets, packing materials for high-temperature treatment such as high-pressure steam sterilization, industrial sealing materials, industrial sewing machine tables, license plate housings, cap liners such as PET bottle cap liners, stationery, office supplies, OA printer legs, fax legs, sewing machine legs, motor support mats, other precision equipment/ OA equipment support members such as audio vibration-proofing materials, OA heat-resistant packing and costume cases, desk mats.

Examples

Hereinafter, the present invention will be more specifically described based on Examples, but the present invention is not limited to these Examples.

(Measurement method and evaluation method)

(1) Polymer or resin composition:

[Melt flow rate (MFR)]

Melt flow rates (MFRs) were measured under a load of 2.16 kg according to ASTM D-1238. The measurement temperatures were set to 230°C for propylene-based polymers such as the crystalline propylene/ethylene block copolymer (A) and resin compositions containing a propylene-based polymer and set to 190°C for ethylene-based polymers such as the ethylene-based polymer (B) and the copolymer rubber (D).

[Intrinsic viscosity [$\eta$]]

About 25 mg of a sample was dissolved in 25 ml of tetralin, and the specific viscosity $\eta_{sp}$ was measured in an oil bath at 135°C. 5 ml of a tetralin solvent was added to this tetralin solution to dilute the tetralin solution, and the specific viscosity $\eta_{sp}$ was then measured in the same manner. This dilution operation was further repeated twice, the value of $\eta_{sp}/C$ when the concentration (C) was extrapolated to 0 was obtained as the intrinsic viscosity, and this value was regarded as the intrinsic viscosity [$\eta$].

[Proportion of structural unit derived from ethylene]

On a measurement sample, $^{13}$C-NMR measurement was performed under the following conditions.

(13C-NMR measurement conditions)

Measuring instrument: LA400 type nuclear magnetic resonance device manufactured by JEOL Ltd.
Measurement mode: BCM (bilevel complete decoupling)
Observation frequency: 100.4 MHz
Observation range: 17006.8 Hz
Pulse width: C nucleus 45° (7.8 μsec)
Pulse repetition time: 5 seconds
Sample tube: 5 mmφ
Sample tube rotation speed: 12 Hz
Cumulative number: 20000 times
Measurement temperature: 125°C
Solvent: 0.35 ml of 1,2,4-trichlorobenzene/0.2 ml of heavy benzene
Sample amount: About 40 mg

From the spectrum obtained by the measurement, the rate of a monomer chain distribution (triad distribution) was determined according to the following literature (1), and the mole fraction (mol%) of the structural unit derived from ethylene in the measurement sample (hereinafter, expressed as E (mol%)) and the mole fraction (mol%) of the structural unit derived from propylene (hereinafter, expressed as P (mol%)) were calculated. From the obtained E (mol%) and P (mol%), the proportion (mass%) of the structural unit derived from ethylene in the measurement sample (hereinafter, expressed as E (mass%)) was calculated according to the following (Formula 1).

Literature (1): Kakugo,M.; Naito,Y.; Mizunuma,K.; Miyatake,T., Carbon-13 NMR determination of monomer sequence distribution in ethylene-propylene copolymers prepared with delta-titanium trichloride-diethylaluminum chloride. Macromolecules 1982, 15, (4), 1150-1152

$$E \text{ (mass\%)} = E \text{ (mol\%)} \times 28 \times 100/[P \text{ (mol\%)} \times 42 + E \text{ (mol\%)} \times 28]$$

[Melting point]

Measurement was performed under the following conditions using a differential scanning calorimeter (DSC, manufactured by PerkinElmer, Inc. (Diamond DSC)) according to JIS K 7121, and the temperature for the apex of an endothermic peak in a third step was defined as the melting point (Tm). In a case where there are a plurality of endothermic peaks, the temperature for the apex of the highest endothermic peak is defined as the melting point (Tm).

(Measurement conditions)

Atmosphere: Nitrogen gas atmosphere
Sample amount: 5 mg
Sample shape: Press film (molded at 230°C, thickness: 200 to 400 μm)
First step: The sample is heated from 30°C up to 240°C at a rate of 10°C/min and held for 10 minutes.
Second step: The sample is cooled to 60°C at 10°C/min.
Third step: The sample is heated up to 240°C at a rate of 10°C/min.

[Mesopentad fraction (mmmm fraction)]

The mesopentad fraction (mmmm fraction, %), which is one index of the stereoregularity of a polymer and is obtained by investigating the microtacticity, is a value determined by attribution based on Macromolecules 8 by A. Zambelli et al., 687 (1975) in a propylene homopolymer, was measured under the following conditions by 13C-NMR and defined as mesopentad fraction = (peak area at 21.7 ppm)/(peak area at 19 to 23 ppm) × 100.

(Measurement conditions)

Device: Manufactured by Bruker
AVANCE III cryo-500 type nuclear magnetic resonance device
Measurement nucleus: $^{13}C$ (125 MHz)
Measurement mode: Single pulse proton broadband decoupling
Pulse width: 45° (5.00 microseconds)
Repetition time: 5.5 seconds
Cumulative number: 256 times/
Measurement solvent: o-Dichlorobenzene/heavy benzene (80/20 vol%)-mixed solvent
Sample concentration: 50 mg/0.6 mL
Measurement temperature: 120°C
Chemical shift criterion: 21.59 ppm

[Crystalline propylene polymer component amount and propylene-based copolymer component amount]

The crystalline propylene polymer component was considered as a 23°C n-decane insoluble portion ($D_{insol}$), the propylene-based copolymer component was considered as a 23°C n-decane soluble portion ($D_{sol}$), and the amount (mass%) of each component was measured by the following method.

200 ml of n-decane was added to 5 g of a sample, and the sample was heated and dissolved at 145°C for 30 minutes, thereby obtaining a solution (1).

Next, the solution (1) was cooled to 23°C over 2 hours and left to stand at 23°C for 30 minutes, thereby obtaining a solution (2) containing a precipitate ($\alpha$). After that, the precipitate ($\alpha$) was filtered out from the solution (2) with a filter cloth having about 15 $\mu$m mesh openings, the precipitate ($\alpha$) was dried, and the mass of the precipitate ($\alpha$) was then measured. A value obtained by dividing the mass of the precipitate ($\alpha$) by the sample mass (5 g) was regarded as the proportion of the 23°C n-decane insoluble portion ($D_{insol}$), and the amount (mass%) of the crystalline propylene polymer component was obtained.

In addition, the solution (2) from which the precipitate ($\alpha$) had been filtered out was put into acetone that was about three times as much as the solution (2), and a component dissolved in n-decane was precipitated, thereby obtaining a precipitate ($\beta$). After that, the precipitate ($\beta$) was filtered out with a glass filter (G2, mesh openings of about 100 to 160 $\mu$m) and dried, and the mass of the precipitate ($\beta$) was measured. A value obtained by dividing the mass of the precipitate ($\beta$) by the sample mass (5 g) was regarded as the proportion of the 23°C n-decane soluble portion ($D_{sol}$), and the amount (mass%) of the propylene-based copolymer component was obtained.

(2) Evaluation of molded article:

[Flexural modulus]

A test piece was made from each of the resin compositions obtained in Examples and Comparative Examples according to JIS K 7171, and the flexural modulus was measured under the following conditions.

(Measurement conditions)

Test piece: 10 mm (width) $\times$ 80 mm (length) $\times$ 4.0 mm (thickness)
Bending speed: 2 mm/minute
Bending span: 64 mm

[Charpy impact strength]

A test piece was made from each of the resin compositions obtained in Examples and Comparative Examples according to JIS K 7111, and the notched Charpy impact strength was measured under the following conditions.

(Measurement conditions)

Temperature: -30°C and 23°C
Test piece: 10 mm (width) $\times$ 80 mm (length) $\times$ 4 mm (thickness)

The notch was mechanically processed.

[Rockwell hardness]

Rockwell hardness on R scale was measured according to JIS K 7202.

[High-speed surface impact test]

At -30°C, a load cell-attached striking core having a tip diameter of 1/2 inches was caused to collide with a 3 mm-thick square plate test piece at a speed of 5 m/s. On the rear surface of the test piece, a stand having a tip diameter (receiving diameter) of 3 inches was used as a cradle. The total absorbed energy (J) of the test piece was obtained as described above.

[Spiral flow]

A mold for measuring a resin flow length having a flow path on a spiral that was 3 mm in thickness and 10 mm in width was used. Measurement was performed under the following spiral flow measurement injection molding conditions.

    Injection molding machine: J110AD, manufactured by The Japan Steel Works, Ltd.
    Cylinder temperature: 230°C
    Mold temperature: 40°C
    Injection time: 10 seconds (no set holding pressure)

[Preparation Example 1] (Preparation of solid titanium catalyst component)

A solid titanium catalyst component containing 1.3 wt% of titanium, 20 wt% of magnesium, 13.8 wt% of diisobutylphthalate and 0.8 wt% of diethylphthalate was obtained according to the preparation of <solid titanium catalyst component (1-1)> in Production Example 3 of JP2020-114909A.

[Preparation Example 2] (Preparation of preliminary polymerization catalyst)

112.0 g of the solid titanium catalyst component synthesized in Preparation Example 1, 83.0 mL of triethylaluminum, 23.6 mL of diethylaminotriethoxysilane and 10 L of heptane were inserted into a stirrer-attached autoclave having an internal capacity of 20 L and held at an internal temperature of 15°C to 20°C, 672 g of propylene was inserted thereinto, and the components were reacted under stirring for 120 minutes. After the end of polymerization, a solid component was settled, and removal of a supernatant liquid and washing with heptane were performed twice. The obtained preliminary polymerization catalyst was re-suspended in purified heptane to perform adjustment by the addition of heptane so that the concentration of the solid titanium catalyst component reached 0.7 g/L. This preliminary polymerization catalyst contained 6 g of polypropylene per gram.

[Production Example 1] (Production of propylene/ethylene block copolymer (A-1))

<Step (1)>

300 L of propylene was charged into a stirrer-attached vessel first polymerization vessel having an internal capacity of 1000 L, and while this liquid level was maintained, 118 kg/h of propylene, 1.2 g/h of the preliminary polymerization catalyst obtained in Preparation Example 2 as a solid catalyst component, 13.3 mL/h of triethylaluminum, 5.1 mL/h of diethylaminotriethoxysilane and hydrogen were continuously supplied thereto so that the hydrogen concentration in a gas portion reached 6.6 mol%. Polymerization was performed with the temperature set to 73.5°C, the pressure set to 3.39 MPa-G and the average residence time set to 1.1 hours.
The obtained slurry was sent to a stirrer-attached vessel second polymerization vessel having an internal capacity of 500 L, and polymerization was further performed. 300 L of propylene was charged into the second polymerization vessel, and while this liquid level was maintained, 14.5 kg/h of propylene, 3.2 g/h of dicyclopentadienyldichlorotitanium and hydrogen were continuously supplied thereto so that the hydrogen concentration in a gas portion reached 7.3 mol%. Polymerization was performed with the temperature set to 73.5°C, the pressure set to 3.27 MPa-G and the average residence time set to 1.0 hour, and a homopropylene polymer (H-1) was obtained.

<Step (2A)>

A slurry of the obtained homopropylene polymer (H-1) was sent to a stirrer-attached vessel third polymerization vessel having an internal capacity of 500 L, and polymerization was further performed. 260 L of propylene was charged into the third polymerization vessel, while this liquid level was maintained, 16.9 kg/h of propylene, 0.28 ml/h of ethoxyethoxyethyl acetate as an activity regulator and ethylene were continuously supplied thereto so that the concentration of ethylene that had dissolved in a propylene liquid phase reached 0.198 mol relative to 1 mol of propylene, and hydrogen was continuously supplied thereto so that the hydrogen concentration in a gas portion reached 5.9 mol%. Polymerization was performed with the temperature set to 53.2°C, the pressure set to 3.24 MPa-G, the average residence time set to 0.75 hours and the ethylene concentration in the gas portion set to 29.1 mol%, and a block copolymer (B-1) was obtained.

<Step (2B)>

A copolymer slurry containing the obtained block copolymer (B-1) was sent to a stirrer-attached vessel fourth polymerization vessel having an internal capacity of 500 L, and polymerization was further performed. 260 L of propylene was charged into the fourth polymerization vessel, while this liquid level was maintained, 52.1 kg/h of propylene, 35.2 mg/h of dicyclopentadienyldichlorotitanium and ethylene were continuously supplied thereto so that the concentration of ethylene that had dissolved in a propylene liquid phase reached 0.129 mol relative to 1 mol of propylene, hydrogen was continuously supplied thereto so that the hydrogen concentration in a gas portion reached 0.16 mol%, and polymerization was performed. At this time, the temperature was 60.4°C, the pressure was 3.16 MPa-G, the average residence time was 0.55 hours and the ethylene concentration in the gas portion was 19.7 mol%.

Inactivation, vaporization and then gas-solid separation were performed on the obtained slurry, and vacuum drying was performed at 80°C. As a result, a propylene/ethylene block copolymer (A-1) was obtained.

The characteristics of the obtained homopropylene polymer (H-1), block copolymer (B-1) and propylene/ethylene block copolymer (A-1) were as described below.

· Homopropylene polymer (H-1)

$$\text{Intrinsic viscosity } [\eta] = 0.78 \text{ dl/g}$$

$$\text{MFR (2.16 kg load, 230°C)} = 240 \text{ g/10 min}$$

$$\text{Mesopentad fraction (mmmm fraction)} = 98.1 \text{ mol\%}$$

· Block copolymer (B-1)

$$\text{Intrinsic viscosity } [\eta] = 1.04 \text{ dl/g}$$

$$\text{MFR (2.16 kg load, 230°C)} = 127 \text{ g/10 min}$$

Ethylene content = 13.0 mass%
Proportion of 23°C n-decane soluble portion = 16.7 mass% Ethylene content of 23°C n-decane soluble portion = 53.6 mol% Intrinsic viscosity [η] of 23°C n-decane soluble portion = 2.1 dl/g

· Propylene/ethylene block copolymer (A-1)

$$\text{Intrinsic viscosity } [\eta] = 1.39 \text{ dl/g}$$

$$\text{MFR (2.16 kg load, 230°C)} = 54 \text{ g/10 min}$$

Ethylene content = 15.4 mass%

Proportion of 23°C n-decane soluble portion = 19.3 mass%

Ethylene content of 23°C n-decane soluble portion = 52.3 mol% Intrinsic viscosity [η] of 23°C n-decane soluble portion = 3.3 dl/g

The characteristics of the propylene/ethylene block copolymer (A-1) determined based on the above-described characteristics are shown in Table 1. A propylene-based copolymer components (PP-1) was regarded as the 23°C n-decane insoluble portion, and propylene-based copolymer components (EP-1) and (EP-2) were regarded as 23°C n-decane soluble portions.

[Comparative Production Example 1] (Production of polymer mixture (A'-1))

<Production of block copolymer (a-1)>

To a tubular polymerization vessel having an internal capacity of 8 L, 20 kg/h of propylene, 0.5 NL/h of hydrogen, 0.38 g/h of the preliminary polymerization catalyst obtained in Preparation Example 2 per solid catalyst component, 2.1 mL/h of triethylaluminum and 1.6 mL/h of diethylaminotriethoxysilane were continuously supplied, and polymerization was performed in a full liquid state where there was no gas phase. The temperature of the tubular polymerization vessel was 16°C, and the pressure was 3.6 MPa-G.

The obtained slurry was sent to a tubular polymerization vessel having an internal capacity of 58 L, and polymerization was further performed. 23 kg/h of propylene and 172 NL/h of hydrogen were continuously supplied to the polymerization vessel, the temperature was 70°C, the pressure was 3.6 MPa-G, and the average residence time was 0.61 hours.

The obtained slurry was sent to a stirrer-attached vessel polymerization vessel having an internal capacity of 70 L, and polymerization was further performed. To the polymerization vessel, 45 kg/h of propylene and hydrogen were continuously supplied so that the hydrogen concentration in a gas portion reached 9.6 mol%. Polymerization was performed with the temperature set to 68.0°C, the pressure set to 3.2 MPa-G and the average residence time set to 0.35 hours, and a homopropylene polymer (h-1) was obtained.

The obtained slurry was transferred to a liquid transfer tube having an internal capacity of 2.4 L, and 1.83 g/h of an activity regulator (ATMER163, manufacture by Croda Japan K.K.) and 0.51 g/h of an adhesion inhibitor (L-71 (trade name), manufactured by ADEKA Corporation) were supplied into the liquid transfer tube and brought into contact with the slurry. The slurry with which the activity regulator and the adhesion inhibitor had been brought into contact was vaporized and separated into gas and solid, then, the powder of the homopropylene polymer (h-1) was sent to a gas-phase polymerization vessel having an internal capacity of 480 L so that the amount of the powder reached 12.4 kg, after that, propylene, ethylene and hydrogen were continuously supplied thereto so that the mole ratio of ethylene/(ethylene + propylene) reached 0.3295 and the mole ratio of hydrogen/ethylene reached 0.1460 in the gas composition in the gas-phase polymerization vessel, and polymerization was performed with the temperature set to 70°C, the pressure set to 1.2 MPa-G and the residence time set to 0.68 hours.

After that, gas-solid separation was performed, vacuum drying was performed at 80°C, and a block copolymer (a-1), which was a polymer for blending, was obtained. The characteristics of the obtained homopropylene (h-1) and block copolymer (a-1) were as described below.

· Homopropylene polymer (h-1)

Intrinsic viscosity [η] = 0.74 dl/g

MFR (2.16 kg load, 230°C) = 252 g/10 min mesopentad fraction (mmmm fraction) = 98.2 mol%
· Block copolymer (a-1)
Intrinsic viscosity [η] = 0.94 dl/g
MFR (2.16 kg load, 230°C) = 90 g/10 min
Ethylene content = 15.1 mass%
Proportion of 23°C n-decane soluble portion = 19.5 mass% Ethylene content of 23°C n-decane soluble portion = 53 mol% Intrinsic viscosity [η] of 23°C n-decane soluble portion = 2.1 dl/g

<Production of block copolymer (a-2)>

To a tubular polymerization vessel having an internal capacity of 8 L, 20 kg/h of propylene, 0.5 NL/h of hydrogen, 0.30 g/h of the preliminary polymerization catalyst obtained in Preparation Example 2 per solid catalyst component, 1.7 mL/h of triethylaluminum and 1.3 mL/h of diethylaminotriethoxysilane were continuously supplied, and polymerization was performed in a full liquid state where there was no gas phase. The temperature of the tubular polymerization vessel was 16°C, and the pressure was 3.2 MPa-G. The obtained slurry was sent to a tubular polymerization vessel having an internal capacity of 58 L, and polymerization was further performed. 23 kg/h of propylene and 172 NL/h of hydrogen were continuously supplied to the polymerization vessel, the temperature was 63°C, the pressure was 3.2 MPa-G, and the average residence time was 0.60 hours.

The obtained slurry was sent to a stirrer-attached vessel polymerization vessel having an internal capacity of 70 L, and polymerization was further performed. To the polymerization vessel, 45 kg/h of propylene and hydrogen were continuously supplied so that the hydrogen concentration in a gas portion reached 9.5 mol%. Polymerization was performed with the temperature set to 62.0°C, the pressure set to 2.8 MPa-G and the average residence time set to 0.35 hours, and a homopropylene polymer (h-2) was obtained.

The obtained slurry was transferred to a liquid transfer tube having an internal capacity of 2.4 L, and 0.32 g/h of an adhesion inhibitor (L-71 (trade name), manufactured by ADEKA Corporation) were supplied into the liquid transfer tube and brought into contact with the slurry. The slurry with which the activity regulator and the adhesion inhibitor had been brought into contact was vaporized and separated into gas and solid, then, the powder of the homopropylene polymer (h-2) was sent to a gas-phase polymerization vessel having an internal capacity of 480 L so that the amount of the powder reached 20.6 kg, after that, propylene, ethylene and hydrogen were continuously supplied thereto so that the mole ratio of ethylene/(ethylene + propylene) reached 0.158 and the mole ratio of hydrogen/ethylene reached 0.0030 in the gas composition in the gas-phase polymerization vessel. Polymerization was performed with the polymerization temperature set to 75°C, the pressure set to 1.6 MPa-G and the residence time set to 1.42 hours.

After that, gas-solid separation was performed, vacuum drying was performed at 80°C, and a block copolymer (a-2) was obtained. The characteristics of the obtained homopropylene polymer (h-2) and block copolymer (a-2) were as described below.

· Homopropylene polymer (h-2)

$$Intrinsic\ viscosity\ [\eta]\ =\ 0.77\ dl/g$$

$$MFR\ (2.16\ kg\ load,\ 230°C)\ =\ 250\ g/10\ min$$

mesopentad fraction (mmmm fraction) = 98.2 mol%
· Block copolymer (a-2)

$$Intrinsic\ viscosity\ [\eta]\ =\ 4.06\ dl/g$$

$$MFR\ (2.16\ kg\ load,\ 230°C)\ =\ 0.8\ g/10\ min$$

Ethylene content = 23.8 mass%
Proportion of 23°C n-decane soluble portion = 39.7 mass% Ethylene content of 23°C n-decane soluble portion = 45 mol% Intrinsic viscosity [η] of 23°C n-decane soluble portion = 8.0 dl/g

<Production of polymer mixture (A'-1)>

83 Parts by mass of the block copolymer (a-1) obtained above, 7.8 parts by mass of the block copolymer (a-2), 9.2 parts by mass of a homopropylene polymer (PRIMEPOLYPRO (registered trademark) J137G (trade name), manufactured by Prime Polymer Co., Ltd.), 0.1 parts by mass of calcium stearate (manufactured by NOF Corporation), and as antioxidants, 0.1 parts by mass of IRGANOX (registered trademark) 1010 (manufactured by BASF Japan Ltd.), 0.1 parts by mass of IRGAFOS168 (manufactured by BASF Japan Ltd.) and 0.1 parts by mass of H-BHT (Honshu Chemical Industry Co., Ltd.) were combined together and dry-blended with a tumbler mixer. After that, the components were melt-kneaded with a twin screw extruder (manufactured by Nakatani Kikai Co., Ltd.: NR-II, same-direction rotation twin screw extruder) under the conditions of a barrel temperature (kneading temperature) of 190°C, a screw rotation speed of 200 rpm and an extrusion amount of 20 kg/h, thereby obtaining a polymer mixture (A'-1).

The characteristics of the polymer mixture (A'-1) determined based on the characteristics of, for example, the above-described homopropylene polymer (h-1) are shown in Table 1.

[Table 1]

Table 1

| | | | | Production Example 1 | Comparative Production Example 1 |
|---|---|---|---|---|---|
| Propylene-based block copolymer/polymer mixture | | | | A-1 | A'-1 |
| Requirement (1) | Propylene-based copolymer component | Intrinsic viscosity [η] | dl/g | 3.3 | 3.0 |
| | | Ethylene content | mol% | 53 | 52 |
| | | Amount | Mass% | 20 | 20 |
| Requirement (2) | Propylene-based copolymer component (EP-1) | Intrinsic viscosity [η] | dl/g | 2.1 | |
| | | Ethylene content | mol% | 54 | |
| | | Amount | Mass% | 16.7 | |
| | Propylene-based copolymer component (EP-2) | Intrinsic viscosity [η] | dl/g | 9.5 | |
| | | Ethylene content | mol% | 45 | |
| | | Amount | Mass% | 3.1 | |
| Requirement (3) | Mass ratio (component (EP-1)/component (EP-2)) | | - | 5.4 | |
| Requirement (4) | Propylene-based block copolymer | MFR (230°C, 2.16 kg load) | g/10min | 54 | 51 |
| Requirement (5) | | Melting point | °C | 163 | 163 |
| Requirement (6) | Propylene-based polymer component (PP-1) | Mesopentad (mmmm) fraction | % | 98.1 | 98.2 |

[Example 1]

65 Parts by mass of the propylene-based block copolymer (A-1) obtained in Production Example 1, 14 parts by mass of the ethylene polymer (B-1) (manufactured by Primer Polymer Co. Ltd., EVOLUE4030 (MFR (190°C, 2.16 kg) = 3.8 g/10 min, density = 938 kg/m$^3$)), 21 parts by mass of talc (JM-209(C) (trade name), manufactured by Asada Milling Co., Ltd.), 0.1 parts by mass of calcium stearate (manufactured by NOF Corporation), and as antioxidants, 0.1 parts by mass of IRGANOX 1010 (trade name, manufactured by BASF Japan Ltd.) and 0.1 parts by mass of IRGAFOS168 (trade name, manufactured by BASF Japan Ltd.) were combined together and dry-blended with a tumbler mixer. After that, the components were melt-kneaded with a twin screw extruder (manufactured by The Japan Steel Works, Ltd., TEX (registered trademark) 30$\alpha$) under the conditions of a cylinder temperature of 180°C, a screw rotation of 750 rpm and an extrusion amount of 60 kg/h and pelletized. These pellets were molded into test pieces with an injection molding machine, and the above-described evaluations were performed. The results are shown in Table 2.

[Example 2]

The pellets and test pieces of a resin composition were produced and evaluated in the same manner as in Example 1 except that, in Example 1, the amount of the ethylene polymer (B-1) was set to 10 parts by mass and 4 parts by mass of a copolymer rubber (D) (ethylene/1-octene copolymer (EOR), manufactured by The Dow Chemical Company, ENGAGE8200 (MFR (190°C, 2.16 kg) = 5.0 g/10 min, density = 870 kg/m$^3$)) was combined. The results of evaluation are shown in Table 2.

[Example 3]

The pellets and test pieces of a resin composition were produced and evaluated in the same manner as in Example 1 except that, in Example 1, the amount of the ethylene polymer (B-1) was set to 7 parts by mass and 7 parts by mass of a copolymer rubber (D) (ethylene/1-octene copolymer (EOR), manufactured by The Dow Chemical Company, ENGAGE8200 (MFR (190°C, 2.16 kg) = 5.0 g/10 min, density = 870 kg/m$^3$)) was combined. The results of evaluation are shown in Table 2.

[Example 4]

The pellets and test pieces of a resin composition were produced and evaluated in the same manner as in Example 1 except that, in Example 1, the amount of the ethylene polymer (B-1) was set to 4 parts by mass and 10 parts by mass of a copolymer rubber (D) (ethylene/1-octene copolymer (EOR), manufactured by The Dow Chemical Company, ENGAGE8200 (MFR (190°C, 2.16 kg) = 5.0 g/10 min, density = 870 kg/m$^3$)) was combined. The results of evaluation are shown in Table 2.

[Example 5]

The pellets and test pieces of a resin composition were produced and evaluated in the same manner as in Example 1 except that, in Example 1, the amount of the ethylene polymer (B-1) was set to 2 parts by mass and 12 parts by mass of a copolymer rubber (D) (ethylene/1-octene copolymer (EOR), manufactured by The Dow Chemical Company, ENGAGE8200 (MFR (190°C, 2.16 kg) = 5.0 g/10 min, density = 870 kg/m$^3$)) was combined. The results of evaluation are shown in Table 2.

[Comparative Example 1]

The pellets and test pieces of a resin composition were produced and evaluated in the same manner as in Example 3 except that, in Example 3, 65 parts by mass of the propylene-based block copolymer (A-1) was changed to 65 parts by mass of the polymer mixture (A'-1). The results of evaluation are shown in Table 2.

[Comparative Example 2]

The pellets and test pieces of a resin composition were produced and evaluated in the same manner as in Example 1 except that, in Example 1, 14 parts by mass of the ethylene polymer (B-1) was changed to 14 parts by mass of the copolymer rubber (D). The results of evaluation are shown in Table 2.

[Table 2]

Table 2

| | | Example 1 | Example 2 | Example 3 | Example 4 | Example 5 | Comparative Example 1 | Comparative Example 2 |
|---|---|---|---|---|---|---|---|---|
| Propylene/ethylene block copolymer | (A-1) | 65 | 65 | 65 | 65 | 65 | | 65 |
| Polymer mixture | (A'-1) | | | | | | 65 | |
| Ethylene-based polymer | (B-1) | 14 | 10 | 7 | 4 | 2 | 7 | |
| Inorganic filler | (C) | 21 | 21 | 21 | 21 | 21 | 21 | 21 |
| Copolymer rubber | (D) | | 4 | 7 | 10 | 12 | 7 | 14 |
| MFR (230°C, 2.16 kgf) | g/10min | 21 | 20 | 20 | 20 | 21 | 28 | 21 |
| Bending modulus | MPa | 2136 | 2034 | 1974 | 1952 | 1875 | 2108 | 1810 |
| Charpy impact strength (23°C) | KJ/m$^2$ | 11 | 15 | 36 | 40 | 50 | 15 | 59 |
| Charpy impact strength (-30°C) | KJ/m$^2$ | 2.5 | 2.6 | 3.4 | 3.8 | 4.3 | 2.4 | 4.5 |
| Rockwell hardness | R-scale | 46 | 40 | 40 | 34 | 27 | 46 | 25 |
| High-speed surface impact | J | 22 | 33 | 32 | 36 | 37 | 4.2 | 35 |
| Spiral flow | cm | 142 | 140 | 139 | 138 | 136 | 133 | 136 |

EP 4 553 114 A1

[Example 6]

The pellets and test pieces of a resin composition were produced and evaluated in the same manner as in Example 3 except that, in Example 3, 7 parts by mass of the ethylene polymer (B-1) was changed to 7 parts by mass of an ethylene polymer (B-2) (manufactured by Primer Polymer Co. Ltd., EVOLUE SP1540 (MFR (190°C, 2.16 kg) = 3.8 g/10 min, density = 913 kg/m$^3$)).
The results of evaluation are shown in Table 3.

[Example 7]

The pellets and test pieces of a resin composition were produced and evaluated in the same manner as in Example 3 except that, in Example 3, 7 parts by mass of the ethylene polymer (B-1) was changed to 7 parts by mass of an ethylene polymer (B-3) (manufactured by Primer Polymer Co. Ltd., EVOLUE SP4020 (MFR (190°C, 2.16 kg) = 1.8 g/10 min, density = 937 kg/m$^3$)). The results of evaluation are shown in Table 3.

[Example 8]

The pellets and test pieces of a resin composition were produced and evaluated in the same manner as in Example 3 except that, in Example 3, 7 parts by mass of the ethylene polymer (B-1) was changed to 7 parts by mass of an ethylene polymer (B-4) (manufactured by Dow-Mitsui Polychemicals, MIRASON 11P (MFR (190°C, 2.16 kg) = 7.2 g/10 min, density = 917 kg/m$^3$)). The results of evaluation are shown in Table 3.

[Comparative Example 3]

The pellets and test pieces of a resin composition were produced and evaluated in the same manner as in Example 6 except that, in Example 6, 65 parts by mass of the propylene-based block copolymer (A-1) was changed to 65 parts by mass of the polymer mixture (A'-1). The results of evaluation are shown in Table 3.

[Comparative Example 4]

The pellets and test pieces of a resin composition were produced and evaluated in the same manner as in Example 8 except that, in Example 8, 65 parts by mass of the propylene-based block copolymer (A-1) was changed to 65 parts by mass of the polymer mixture (A'-1). The results of evaluation are shown in Table 3.

[Table 3]

Table 3

| | | Example 6 | Example 7 | Example 8 | Comparative Example 3 | Comparative Example 4 |
|---|---|---|---|---|---|---|
| Propylene/ethylene block copolymer | (A-1) | 65 | 65 | 65 | | |
| Polymer mixture | (A'-1) | | | | 65 | 65 |
| Ethylene-based polymer | (B-2) | 7 | | | 7 | |
| | (B-3) | | 7 | | | |
| | (B-4) | | | 7 | | 7 |
| Inorganic filler | (C) | 21 | 21 | 21 | 21 | 21 |
| Copolymer rubber | (D) | 7 | 7 | 7 | 7 | 7 |
| MFR (230°C, 2.16 kgf) | g/10min | 19 | 19 | 17 | 28 | 24 |
| Bending modulus | MPa | 1912 | 1973 | 1898 | 2050 | 2011 |
| Charpy impact strength (23°C) | KJ/m$^2$ | 49 | 32 | 27 | 25 | 15 |

(continued)

| | | Example 6 | Example 7 | Example 8 | Comparative Example 3 | Comparative Example 4 |
|---|---|---|---|---|---|---|
| Charpy impact strength (-30°C) | KJ/m$^2$ | 4 | 3.4 | 3.4 | 2.5 | 2.4 |
| Rockwell hardness | R-scale | 34 | 36 | 35 | 43 | 43 |
| High-speed surface impact | J | 31 | 30 | 29 | 4.1 | 2.5 |
| Spiral flow | cm | 137 | 138 | 137 | 133 | 131 |

## Claims

1. A resin composition comprising:

   50 to 94 parts by mass of a crystalline propylene/ethylene block copolymer (A) satisfying the following requirements (1) to (3);
   1 to 25 parts by mass of an ethylene-based polymer (B) that is an ethylene homopolymer or copolymer of ethylene and an $\alpha$-olefin having 4 to 12 carbon atoms having a density of 915 to 980 kg/m$^3$ and a melt flow rate (MFR) measured at a temperature of 190°C and a load of 2.16 kg of 0.1 to 30 g/10 min; and
   5 to 25 parts by mass of an inorganic filler (C) (here, a total of the crystalline propylene/ethylene block copolymer (A), the ethylene-based polymer (B) and the inorganic filler (C) is set to 100 parts by mass),

   requirement (1): the crystalline propylene/ethylene block copolymer (A) is a block copolymer composed of a crystalline propylene polymer component and a propylene-based copolymer component, in which an amount of the propylene-based copolymer component is 10 to 50 mass%, an intrinsic viscosity [$\eta$] of the propylene-based copolymer component that is measured in tetralin at 135°C is 2.0 to 6.0 dl/g, and a proportion of a structural unit derived from ethylene in the propylene-based copolymer component is 30 to 80 mol%,
   requirement (2): the propylene-based copolymer component contains a copolymer component (EP-1) and a copolymer component (EP-2),

   the copolymer component (EP-1) is a component containing 40 to 80 mol% of a structural unit derived from ethylene and having an intrinsic viscosity [$\eta$] that is measured in tetralin at 135°C of 1.5 to 4.0 dl/g, and
   the copolymer component (EP-2) is a component containing 30 to 50 mol% of a structural unit derived from ethylene and having an intrinsic viscosity [$\eta$] that is measured in tetralin at 135°C of 5.0 to 10 dl/g, and

   requirement (3): a mass ratio (EP-1/EP-2) of the copolymer component (EP-1) to the copolymer component (EP-2) is 10/1 to 1/1.

2. The resin composition according to claim 1, wherein the copolymer component (EP-1) contains 51 to 58 mol% of the structural unit derived from ethylene, and
   the copolymer component (EP-2) contains 38 to 48 mol% of the structural unit derived from ethylene.

3. The resin composition according to claim 1, wherein the crystalline propylene/ethylene block copolymer (A) further satisfies the following requirements (4) to (6),

   requirement (4): a melt flow rate (MFR) measured at a temperature of 230°C and a load of 2.16 kg is 1 to 500 g/10 min,
   requirement (5): a melting point measured with a differential scanning calorimeter (DSC) is 155°C to 170°C, and
   requirement (6): a mesopentad fraction (mmmm fraction) of the crystalline propylene polymer component that is measured by $^{13}$C-NMR is 96.0% to 99.9%.

4. The resin composition according to claim 1, wherein the crystalline propylene/ethylene block copolymer (A) further satisfies at least one of the following requirements (7) and (8),

requirement (7): $\Delta$C2 that is a difference between a content of the structural unit derived from ethylene of the copolymer component (EP-1) and a content of the structural unit derived from ethylene of the copolymer component (EP-2) is 1.0 to 13 mol%, and

requirement (8): $\Delta\eta$ that is a difference between the intrinsic viscosity [$\eta$] of the copolymer component (EP-1) that is measured in tetralin at 135°C and the intrinsic viscosity [$\eta$] of the copolymer component (EP-2) that is measured in tetralin at 135°C is 5.8 to 8.5 dl/g.

5.   The resin composition according to claim 1, further comprising:

25 parts by mass or less of a copolymer rubber (D) relative to a total of 100 parts by mass of the crystalline propylene/ethylene block copolymer (A), the ethylene-based polymer (B) and the inorganic filler (C), wherein the copolymer rubber (D) is a copolymer of ethylene and an $\alpha$-olefin having 4 to 12 carbon atoms having a density of 850 to 910 kg/m$^3$ and a melt flow rate (MFR) measured at a temperature of 190°C and a load of 2.16 kg of 0.2 g/10 min or more and less than 40 g/10 min.

6.   A molded article formed of the resin composition according to any one of claims 1 to 5.

7.   The molded article according to claim 6, wherein the molded article is an injection molded article.

8.   The molded article according to claim 6 that is an automotive part.

9.   The molded article according to claim 8, wherein the automotive part is a bumper.

<table>
<tr><td colspan="2" align="center">**INTERNATIONAL SEARCH REPORT**</td><td colspan="2">International application No.<br><br>**PCT/JP2023/023764**</td></tr>
</table>

**A.  CLASSIFICATION OF SUBJECT MATTER**

*C08L 53/00*(2006.01)i; *C08K 3/013*(2018.01)i; *C08L 23/06*(2006.01)i; *C08L 23/08*(2006.01)i
FI:  C08L53/00; C08K3/013; C08L23/06; C08L23/08

According to International Patent Classification (IPC) or to both national classification and IPC

**B.  FIELDS SEARCHED**

Minimum documentation searched (classification system followed by classification symbols)

C08L53/00; C08K3/013; C08L23/06; C08L23/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| Y | JP 2007-92044 A (SUMITOMO CHEMICAL CO., LTD.) 12 April 2007 (2007-04-12)<br>claims, paragraphs [0012], [0026], [0027], [0034], table 1, examples | 1-9 |
| Y | JP 5-295225 A (TONEN CHEM CORP.) 09 November 1993 (1993-11-09)<br>claims, paragraph [0050], examples | 1-9 |
| Y | JP 5-295224 A (TONEN CHEMICAL CORP.) 09 November 1993 (1993-11-09)<br>claims, paragraph [0050], examples | 1-9 |
| Y | JP 5-98124 A (TONEN CHEMICAL CORP.) 20 April 1993 (1993-04-20)<br>claims, paragraph [0049], examples | 1-9 |
| A | WO 2008/072790 A1 (SUMITOMO CHEMICAL CO., LTD.) 19 June 2008 (2008-06-19)<br>entire text | 1-9 |
| A | JP 2008-239971 A (SUMITOMO CHEMICAL CO., LTD.) 09 October 2008 (2008-10-09)<br>entire text | 1-9 |
| A | JP 2015-113363 A (SUN ALLOMER LTD.) 22 June 2015 (2015-06-22)<br>entire text | 1-9 |

☑ Further documents are listed in the continuation of Box C.    ☑ See patent family annex.

| | |
|---|---|
| *  Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **07 September 2023** | **19 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2023/023764** |

### C. DOCUMENTS CONSIDERED TO BE RELEVANT

| Category* | Citation of document, with indication, where appropriate, of the relevant passages | Relevant to claim No. |
| --- | --- | --- |
| A | JP 2014-61609 A (SUMITOMO CHEMICAL CO., LTD.) 10 April 2014 (2014-04-10) entire text | 1-9 |
| A | JP 2008-208304 A (SUMITOMO CHEMICAL CO., LTD.) 11 September 2008 (2008-09-11) entire text | 1-9 |
| A | JP 2013-203839 A (JAPAN POLYPROPYLENE CORP.) 07 October 2013 (2013-10-07) entire text | 1-9 |
| P, A | JP 2022-159007 A (PRIME POLYMER CO., LTD.) 17 October 2022 (2022-10-17) entire text | 1-9 |

Form PCT/ISA/210 (second sheet) (January 2015)

**INTERNATIONAL SEARCH REPORT**
Information on patent family members

International application No.

**PCT/JP2023/023764**

| Patent document cited in search report | | | Publication date (day/month/year) | Patent family member(s) | | | Publication date (day/month/year) |
|---|---|---|---|---|---|---|---|
| JP | 2007-92044 | A | 12 April 2007 | US | 2008/0319136 | A1 | |
| | | | | claims, paragraphs [0015], [0041], [0042], [0062], table 1, examples | | | |
| | | | | CN | 101291965 | A | |
| JP | 5-295225 | A | 09 November 1993 | (Family: none) | | | |
| JP | 5-295224 | A | 09 November 1993 | (Family: none) | | | |
| JP | 5-98124 | A | 20 April 1993 | (Family: none) | | | |
| WO | 2008/072790 | A1 | 19 June 2008 | US | 2009/0326158 | A1 | |
| | | | | entire text | | | |
| | | | | CN | 101558094 | A | |
| JP | 2008-239971 | A | 09 October 2008 | US | 2008/0221256 | A1 | |
| | | | | entire text | | | |
| | | | | DE | 102008011287 | A | |
| | | | | CN | 101255255 | A | |
| | | | | CN | 104558850 | A | |
| JP | 2015-113363 | A | 22 June 2015 | (Family: none) | | | |
| JP | 2014-61609 | A | 10 April 2014 | (Family: none) | | | |
| JP | 2008-208304 | A | 11 September 2008 | (Family: none) | | | |
| JP | 2013-203839 | A | 07 October 2013 | (Family: none) | | | |
| JP | 2022-159007 | A | 17 October 2022 | (Family: none) | | | |

Form PCT/ISA/210 (patent family annex) (January 2015)

## REFERENCES CITED IN THE DESCRIPTION

**Patent documents cited in the description**

- JP 2007092049 A
- JP 2008239971 A
- WO 0127124 A
- WO 201074001 A
- JP H111999315109 A
- JP 2020114909 A

**Non-patent literature cited in the description**

- *Macromolecules*, 1982, vol. 15 (4), 1150-1152
- **A. ZAMBELLI et al.** *Macromolecules*, 1975, vol. 8, 687